# EUROPÄISCHE PATENTSCHRIFT

(11) **EP 0 844 948 B1**
(45) Veröffentlichungstag und Bekanntmachung des Hinweises auf die Patenterteilung: **23.06.1999**
(21) Anmeldenummer: 96927700.3
(22) Anmeldetag: 07.08.1996
(51) Int. Cl.: B60R 21/22

(54) **KOPF- UND TORAX-SEITENAIRBAG**
SIDE AIRBAG FOR HEAD AND THORAX
COUSSIN DE SECURITE GONFLABLE LATERAL POUR TETE ET THORAX

(30) Priorität: 14.08.1995 DE 19529829
(43) Veröffentlichungstag der Anmeldung: 03.06.1998
(73) Patentinhaber: BSRS Restraint Systems GmbH, 63755 Alzenau (DE)
(72) Erfinder: KIPPELT, Ulrich, D-63755 Alzenau (DE); HEIMBERGER, Manfred, D-63857 Waldaschaft (DE); AMANN, Christian, D-63768 Hösbach (DE)
(74) Vertreter: Fuchs Mehler Weiss & Fritzsche
(86) Internationale Anmeldenummer: EP9603488
(87) Internationale Veröffentlichungsnummer: WO9706985

(56) Entgegenhaltungen:
- EP-A- 0 565 501
- US-A- 5 161 821

## Beschreibung

Die vorliegende Erfindung betrifft einen Kopf- und Thorax-Seitenairbag entsprechend den Merkmalen des Oberbegriffs des Patentanspruchs 1.

In jüngerer Zeit kommen in Kraftfahrzeugen vermehrt Seitenairbags oder Sidebags zum Einsatz. Hierbei handelt es sich um passive Rückhaltekomponenten, die - ähnlich wie herkömmliche Airbags - auf ein Auslösesignal hin schlagartig mit Gas gefüllt werden, um die Person im Falle des Aufpralls des Fahrzeugs zu schützen. Das Auslösesignal wird dabei von einer Sensoreneinheit generiert, und zwar bei Erfüllung gewisser Voraussetzungen, beispielsweise hinsichtlich einer Querbeschleunigung etc. Airbags der Art gemäß Oberbegriff des Patentanspruchs 1 sind durch US-A-5 161 827 und EP-A-0 565 501 bekannt geworden. Üblicherweise sind die Sidebags bzw. die Sidebag-Module mit zugehörigem Gasgenerator in sogenannte Integralsitze eingebaut, sind integriert in der B-Säule des Fahrzeugs oder sind integriert in der Türbrüstung.

Ein aus der Praxis bekanntes System sieht bei einem Sportwagen, bei dem die B-Säule stets sehr weit nach hinten verlagert ist, einen relativ großen Sidebag vor. Aufgrund der sehr Weit nach hinten erfolgten Verlagerung der B-Säule und damit des Umlenkpunktes des Sicherheitsgurtes bereitet es keine Probleme, im Falle des Seitenaufpralls den relativ großen Sidebag aufzublasen, ohne daß der Sidebag Einfluß auf den Gurtverlauf nehmen würde.

Dieses Konzept ist in erster Linie darauf abgestellt, den Thoraxbereich der in dem betreffenden Kraftfahrzeugsitz sitzenden Person zu schützen. Der Schutz hinsichtlich des Kopfbereiches für eine übliche Fahrzeuggeometrie hingegen ist mangelhaft.

Bedenkt man, daß der Kopfbereich beim Seitenaufprall des Fahrzeugs zu den am meisten gefährdeten Körperpartien gehört, woraus letztendlich 50 % aller getöteten Fahrzeuginsassen beim Seitenaufprall resultieren, so wird daraus deutlich, daß eine zusätzlich passive Rückhaltekomponente für den Kopfbereich vonnöten sein wird, einmal abgesehen davon, daß der vorerwähnte Sidebag nur bei ganz bestimmten Fahrzeugtypen zum Einsatz kommen kann, bei denen - wie ausgeführt - die B-Säule des Fahrzeugs nach sehr weit hinten verlagert ist.

Aus der nachveröffentlichten DE 44 30 412 C1 ist ein hiervon modifiziertes System bekanntgeworden, wobei der eine relativ große Gassack in zwei Kammern unterteilt ist. Auch dieses System kann jedoch nur bei einem Fahrzeug zum Einsatz kommen, bei dem die B-Säule des Fahrzeugs sehr weit nach hinten verlagert ist, also insbesondere bei Sportwagen.

Gemäß einem weiteren Vorschlag (EP 0 565 501 A1, Figur 2) sind zwei getrennte Module vorgesehen, wovon jeweils eines dem Thoraxbereich und das andere ausschließlich dem Kopfbereich zugeordnet ist. Beide Luftsäcke der beiden Module sind an der Seite des Fahrzeugsitzes angeordnet. Neben dem hohen apparitiven Aufwand, der bei der Realisierung dieses Vorschlages betrieben wird, bleibt offen, wie das System sich bei angelegtem Schultergurt verhält.

Ein anderes aus der Praxis bekanntes Konzept sieht zwei getrennte Module vor, von welchen eines ausschließlich dem Thoraxbereich und das andere ausschließlich dem Kopfbereich des Fahrzeuginsassen zugeordnet ist. Das dem Thoraxbereich zugeordnete Modul ist ein ansich bekanntes Sidebag-Modul, welches vorzugsweise in der Tür des Fahrzeuges angeordnet ist.

Das dem Kopfbereich zugeordnete Modul ist im Dachhimmel eines Fahrzeugs untergebracht und weist einen Luftsack auf, der bei einem Seitenaufprall röhren- oder schlauchförmig aufgeblasen wird, wobei er von vorn nach hinten im Fahrzeug nach oben schräg verläuft. Durch letztere Maßnahme soll der Tatsache Rechnung getragen werden, daß große Fahrer ihren Fahrzeugsitz im allgemeinen recht weit nach hinten verstellen, wohingegen kleine Personen den Fahrzeugsitz relativ weit nach vorne einstellen. Durch den schrägen Verlauf soll erreicht werden, daß im Regelfall immer der Kopfbereich durch den aufgeblasenen Luftsack abgedämpft wird. Dies mag zwar auf der Fahrerseite noch zutreffen. Problematisch aber wird es im Hinblick auf den beispielsweise Beifahrersitz, wenn nämlich eine relativ kleine Person aus Bequemlichkeitsgründen den Sitz sehr weit nach hinten verstellt. In einem solchen Falle wird der aufgeblasene Luftsack wirkungslos bleiben, da im Falle eines Seitenaufpralls der Kopf der kleinen im Beifahrersitz sitzenden Person gegen die Fahrzeugscheibe oder die B-Säule geschleudert wird.

Darüber hinaus hat dieses Konzept jedoch noch den weiteren Nachteil, daß der apparative Aufbau relativ aufwendig ist. So wird für den Schutz des Thorax- und Kopfbereiches jeweils ein getrenntes Modul benötigt, was einen entsprechend hohen Aufwand allein bei der Montage, beim Material und bei der Adaption an das Fahrzeug mit sich bringt.

Ein weiteres bekanntes Konzept schließlich sieht vor, daß sich ein Kopf-Airbag aus dem Sitz heraus oder aus dem Dach des Fahrzeugs entfaltet. Hierbei ist allerdings Voraussetzung, daß es sich bei dem Fahrzeugsitz um einen sogenannten Gurtintegralsitz handelt. Bei diesem Konzept tritt zwar keine Kollision mit dem Sicherheitsgurt auf, wenn der Kopf-Airbag aufgeblasen wird. Allerdings setzt dieses Konzept voraus, daß der Kraftfahrzeugsitz eine höhenverstellbare Sitzfläche und eine zwar verfahrbare, jedoch nicht in der Höhe verstellbare Lehne aufweist, damit unterschiedlich große Personen in dem Sitz Platz nehmen können und gegebenenfalls von dem Sicherheitskomfort profitieren können.

Gemäß einem weiteren, gattungsgemäßen Vorschlag (EP 0 653 335 A2) ist ein einem Fahrzeugsitz eines Fahrzeugs zugeordnetes Airbagmodul zum seitlichen Schutz des Thorax- und Kopfbereiches einer in dem Fahrzeugsitz sitzenden, mittels eines Sicherheitsgurtes als zusätzliche passive Rückhaltekomponente gesicherten Person vorgesehen mit wenigstens einem Gasgenerator und einem Luftsack mit einer dem Thoraxbereich zugeordneten Kammer und einer dem Kopfbereich zugeordneten Kammer, in welche der wenigstens eine Gasgenerator auf ein Auslösesignal hin schlagartig Gas einleitet.

Auch bei diesem System ist der Einfluß eines Sicherheitsgurtes auf das Rückhalteverhalten nicht berücksichtigt.

Schließlich sei noch der Vollständigkeit halber auf das System gemäß der US 5.322,322 hingewiesen, welches einen röhrenförmigen Luftsack vorsieht, der nach Auslösung von der B-Säule eines Fahrzeugs schräg nach unten geneigt nach vorne verläuft. Die Schutzwirkung ist systembedingt allerdings nur suboptimal.

Vor dem aufgezeigten Hintergrund ist es nun die Aufgabe der vorliegenden Erfindung, ein Airbagmodul zum Einsatz in einem Kraftfahrzeug anzugeben, welches sowohl den Thorax- als auch den Kopfbereich eines Kraftfahrzeuginsassen schützt, wobei keinerlei Einschränkungen hinsichtlich des Einsatzes in nur besonderen Karosserieformen gelten sollen, der Montageaufwand im Vergleich zu der 2-Modul-Lösung relativ gering sein soll und eine gegenseitige Behinderung des Airbag und des Sicherheitsgurtes vermieden wird.

Diese Aufgabe wird gelöst durch das Airbagmodul mit den Merkmalen des Anspruchs 1. Vorteilhafte Weiterbildungen ergeben sich aus den Unteransprüchen.

Ausgehend vom gattungsgemäßen Airbagmodul wird demgemäß vorgeschlagen, daß in der dem Kopfbereich zugeordneten Kammer ein Einschnitt vorgesehen ist, durch welchen der Sicherheitsgurt die Konturen der mit Gas befüllten Kammer durchtritt.

Kern der vorliegenden Erfindung ist demnach der Einschnitt in der dem Kopfbereich zugeordneten Kammer des Luftsackes, durch welchen hindurch der angelegte Sicherheitsgurt hindurchläuft, so daß eine gegenseitige Beeinträchtigung des aufgeblasenen Luftsackes und des Sicherheitsgurtes ausgeschlossen ist.

Darüber hinaus bilden beide Kammern eine bauliche Einheit in Form des Luftsackes, so daß eine umständliche Montage zweier voneinander unabhängiger Module wie im Stand der Technik nicht gegeben ist mit all den Vorteilen und Kostenersparnissen, die damit einhergehen. Das eine bauliche Einheit bildende Airbagmodul ist - wie ausgeführt - dem Fahrzeugsitz zugeordnet. Dies bedeutet, daß das Airbagmodul entweder in dem Fahrzeugsitz, d.h. in der Fahrzeuglehne eingebaut ist, daß das Airbagmodul in der B-Säule des Fahrzeuges untergebracht ist oder daß das Airbagmodul in der Türbrüstung des Fahrzeugs integriert sein kann. Relevant ist die funktionelle Zuordnung zum Fahrzeugsitz, daß also die untere Kammer dem Thoraxbereich des Fahrzeuginsassen und die obere Kammer des Luftsackes dem Kopfbereich zugeordnet ist.

Die bauliche Einheit beider Kammern dadurch, daß sie Bestandteil eines Luftsackes sind, dient der örtlichen Stabilität beider Kammern im aufgeblasenen Zustand.

Abhängig von der jeweiligen Einbaulage, d.h. von der relativen Lage des Gurtumlenkpunktes an der B- oder C-Säule zu der oberen Sitzstruktur (Sitzlehne) ist der besagte Einschnitt in der Kammer entweder oben angesetzt und nach unten gerichtet oder hinten angesetzt und nach vorne gerichtet.

Gemäß einer noch anderen vorteilhaften Ausführungsform ist der Einschnitt in der Kammer vorne angesetzt und verläuft nach hinten gerichtet.

Mit dem erfindungsgemäßen Airbagmodul gelingt es, sämtliche Fahrzeugtypen mit diesem Sicherheitssystem auszustatten, sei es ein viertüriges Fahrzeug der Oberklasse oder ein viertüriges Fahrzeug der unteren Klasse, sei es ein Cabrio, ein Coupè oder zweitüriges Fahrzeug. Stets läßt sich das Airbagmodul so konfigurieren, daß sich die Kammern unbeeinflußt vom Sicherheitsgurt und umgekehrt aufblasen lassen, so daß ein optimaler Schutz für den Thorax- und den Kopfbereich gewährleistet ist.

Es ist bekannt, daß der Thorax- und der Kopfhereich eines Fahrzeuginsassen zeitlich unterschiedlich reagieren im Falle des Unfälls, und zwar reagiert der Thorax schneller, so daß die Kammer für den Thoraxbereich nach kurzer Zeit auf volle Größe aufgeblasen sein muß. Für den Kopfbereich genügt hingegen eine etwas längere Zeitspanne, bevor die Kopfkammer auf volle Größe aufgeblasen sein muß, um eine dämpfende Funktion auszuüben. Dafür aber genügt es für den Thoraxbereich, für eine relativ kurze Zeitspanne aufgeblasen zu sein, während dies für den Kopfbereich nicht ausreicht, um vollen Schutz zu gewähren.

Auch differieren die Druckbedingungen in den beiden Kammern. Die Kammer zum Schutz des Thoraxbereichs muß auf einen gewissen Druck aufgeblasen werden, während die Kammer zum Schutz des Kopfbereichs auf einen höheren Wert aufgeblasen werden kann. In jedem Falle muß dafür gesorgt werden, daß der Kopf nicht durchschlägt, d.h. an die Fahrzeugstruktur schlägt, wohingegen dies beim Thorax nicht ganz so kritisch ist.

Um diesen unterschiedlichen Bedingungen Rechnung zu tragen, ist gemäß einer vorteilhaften Weiterbildung des erfindungsgemäßen Airbagmoduls vorgesehen, daß die beiden Kammern strömungstechnisch voneinander getrennt und jeweils einem eigenen Gasgenerator mit jeweils einem Gasstrom zugeordnet sind. Dies bedeutet, daß die Kammern im wesentlichen an einer Naht miteinander vernäht sind, um eine bauliche Einheit zu bilden. Jede dieser Kammern weist dann einen Einlaßstutzen auf, an dem jeweils ein eigener Gasgenerator sitzt, die beide von einem Auslösesignal oder jeweils von einem eigenen Auslösesignal angesteuert werden. Der apparative Aufwand hierbei ist relativ groß, bietet aber die flexibelste Art und Weise, wie im Falle eines Seitenaufpralls zu r eagieren ist, insofern, als daß in zeitlicher Hinsicht und im Hinblick auf unterschiedliche Drücke in den beiden Kammern der größtmögliche Freiheitsgrad besteht.

Der apparative Aufbau kann etwas verringert werden dadurch, daß gemäß einer anderen Ausführungsform zwar beide Kammern wiederum strömungstechnisch voneinander getrennt sind, jedoch von einem Gasgenerator aufblasbar sind, der zwei Gasströme erzeugt. Der vom Gasgenerator erzeugte Gasstrom wird hierbei geteilt in zwei Gasströme, die sich urabhängig voneinander beeinflussen lassen, so daß unterschiedliche Bedingungen im Inneren der beiden Kammern des Luftsackes erzeugt werden können.

Gemäß zwei anderen Ausführungsformen ist vorgesehen, daß die beiden Kammern untereinander strömungstechnisch miteinander in Verbindung stehen, also gewissermaßen eine Überströmungsöffnung zwischen sich aufweisen und von einem Gasgenerator mit zwei Gasströmen aufblasbar sind oder alternativ von einem Gasgenerator mit nur einem Gasstrom. Hier lassen sich die unterschiedlichen zeitlichen Bedingungen und die Druckbedingungen unter anderem konstruktiv steuern durch das Verhalten der Überströmungsöffnung, also beispielsweise durch deren Durchmesser. Hierdurch wird der konstrutive Aufwand für die verwendeten Gasgeneratoren verringert, d.h. das Modul wird kostengünstiger, da bestimmte Abläufe beim Aufblasen der Kammern konstruktiv durch die Verbindung zwischen beiden Kammern vorgegeben sind, so daß hierzu hardwaremäßig und auch softwaremäßig keinerlei Vorkehrungen getroffen werden müssen.

Wenn beide Kammern in den beiden vorerwähnten Ausführungsformen nur von einem einzigen Gasstrom aufgeblasen werden, so geschieht dies bei einer vorteilhaften Weiterbildung von unten in der Kammer zum Schutz des Thoraxbereiches. Dies vor dem Hintergrund, daß die Kammer zum Schutz des Thoraxbereiches früher aufgeblasen sein muß als die Kammer zum Schutz des Kopfbereiches, wie weiter oben näher erläutert.

Ganz allgemein erfolgt die Einleitung des Gasstromes vorteilhaft von dem wenigstens einen Gasgenerator so, daß die Kammer für den Thoraxbereich früher gefüllt ist als die andere Kammer. Dies kann bei den anderen Ausführungsformen dadurch geschehen, daß beispielsweise der Gasgenerator nur für die untere Kammer zuerst ein Auslösesignal erhält, bevor die obere Kammer gasgefüllt wird. Erzeugt nur ein Gasgenerator zwei Gasströme, kann dies in gleicher Weise beispielsweise durch eine Ventilsteuerung erfolgen.

Vorzugsweise geschieht dies so, daß die zweite Kammer für den Kopfbereich eine längere Bereitstellungszeit, während der sie mit Gas gefüllt ist, aufweist, um den zeitlichen Erfordernissen - wie oben ausgeführt - gerecht zu werden.

Bei einer konkreten Ausführungsform des erfindungsgemäßen Airbagmoduls mit nur einem Gasstrom und mit einem Einschnitt in der oberen Kammer, der oben angesetzt ist und nach unten gerichtet ist, gelangt der Gasstrom bei einem Seitenaufprall zuerst in die Kammer für den Schutz des Thoraxbereiches, wonach er in die obere Kammer gelangt, um die beiden oberen Kammerteile rechts und links vom Sicherheitsgurt aufzublasen, so daß die obere Kammer dann quasi V-förmig um den angelegten Sicherheitsgurt verläuft.

Bei einer anderen konkreten Ausführungsform des Airbagmoduls mit einem Einschnitt in der oberen Kammer, der hinten angesetzt ist und nach vorne gerichtet ist, erfolgt ebenfalls zunächst das Aufblasen der unteren Kammer für den Thoraxbereich. Sodann wird der Übergangsbereich zwischen unterer und oberer Kammer unter Druck gesetzt, was zu einer Richtungsänderung des Auffaltens der oberen Kammer führt, so daß schließlich der übrige Teil der oberen Kammer gefüllt wird, der nach hinten ausweicht und sich über den Sicherheitsgurt legt.

Die Erfindung wird anhand zweier Ausführungsbeispiele näher erläutert. Hierbei zeigt:
Fig. 1 eine schematische Ansicht einer ersten Ausführungsform, und
Fig. 2 eine schematische Ansicht einer zweiten Ausführungsform des Airbagmoduls, und
Fig. 3 eine schematische Ansicht einer dritten Ausführungsform des Airbagmoduls.

Nachfolgend sind gleiche Teile mit denselben Bezugszeichen versehen.

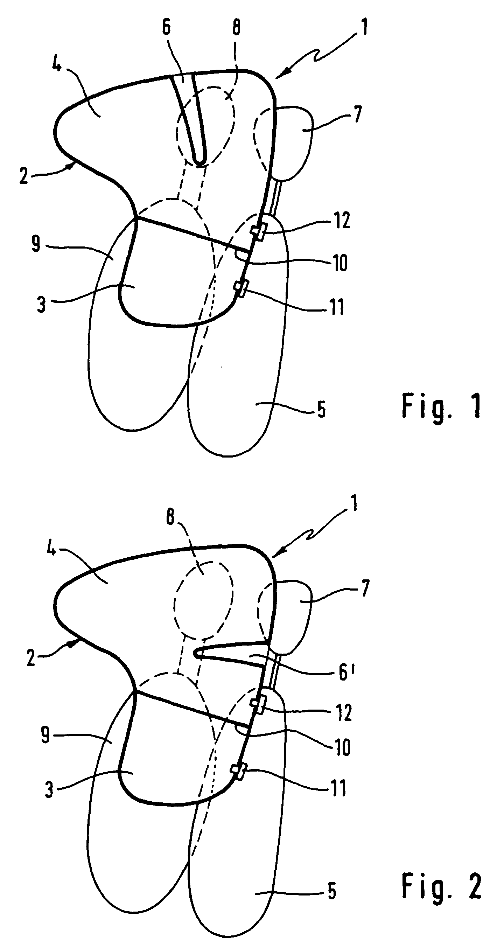

In Fig. 1 ist schematisch ein Fahrzeugsitz durch die Sitzlehne 5 angedeutet, mit welcher die Kopfstütze 7 gekoppelt ist. Ebenfalls schematisch angedeutet ist der Rumpf und insbesondere der Thoraxbereich 9 eines Kraftfahrzeuginsassen, welcher auf dem Kraftfahrzeugsitz sitzt. Angedeutet ist ebenfalls der Kopf 8 des Kraftfahrzeuginsassen.

Deutlich erkennbar ist das hier nur schematisch dargestellte Airbagmodul 1 mit seinem Luftsack 2, welcher die Luftkammern 3 und 4 zu einer baulichen Einheit zusammenfaßt. Das Airbagmodul 1 ist in einer solche Höhe angebracht, daß die Kammer 3 des Luftsackes 2 dem Thoraxbereich 9 des Kraftfahrzeuginsassen und die Kammer 4 des Luftsackes 2 dem Kopfbereich 8 zugeordnet ist. Vorliegend sind beide Kammern 3 und 4 durch eine Naht 10 miteinander zu einer baulichen Einheit verbunden. Strömungstechnisch sind die Kammern 3 und 4 vorliegend nicht miteinander in Verbindung, so daß in dem gezeigten Ausführungsbeispiel je Kammer 3 bzw. 4 ein Einlaßstutzen 11 bzw. 12 für jeweils einen Gasgenerator (nicht dargestellt) vorgesehen ist.

In der oberen Kammer 4 ist nun ein Einschnitt 6 vorgesehen, der oben angesetzt nach unten verläuft. Durch diesen Einschnitt 6 verläuft der angelegte Sicherheitsgurt (nicht dargestellt) so, daß sich beide passiven Rückhaltekomponenten nicht gegenseitig störend beeinflussen. Im Falle eines Seitenaufpralls wird zunächst die untere Kammer zum Schutz des Thoraxbereiches 9 aufgeblasen. Innerhalb einer etwas längeren Zeitdauer muß die obere Kammer zum Schutze des Kopfbereiches aufgeblasen sein. Wie nach Art eines V's werden der vordere und der hintere Teil der Kammer 4 vor bzw. hinter dem Gurt nach oben entfaltet, so daß schließlich der Sicherheitsgurt durch die Konturen des aufgeblasenen Luftsackes durch den Einschnitt 6 hindurchtritt.

In Fig. 2 ist eine andere Ausführungform dargestellt, und zwar in ganz ähnlicher Weise wie jene in Fig. 1. Daher wird nachfolgend nur auf Unterschiedsmerkmale hingewiesen.

Der wesentliche Unterschied bei diesem Ausführungsbeispiel gegenüber jenem aus Fig. 1 ist darin zu sehen, daß der Einschnitt 6' der oberen Kammer 4 hinten angesetzt und nach vom gerichtet ist. Hierdurch ändert sich das Entfaltungsverhalten der oberen Kammer 4 entscheidend, da nämlich zunächst der untere Teil der Kammer 4 aufgeblasen wird, dann der vordere, was zu einer Richtungsänderung führt, so daß der obere Teil sich dann von oben her über den Gurt legt, so daß dieser schließlich die Konturen der oberen Kammer durch den Einschnitt 6' durchtritt, ohne daß sich beide passiven Rückhaltekomponerten störend beeinflussen.

Das erfindungsgemäße Airbagmodul kann in der Sitzlehne 5 integriert sein, wie dies in den Fign. 1 und 2 angedeutet ist. Es kann jedoch auch in der B- oder C-Säule oder aber in der Türbrüstung integriert sind. Entscheidend für die Erfindung ist, daß eine gegenseitige Beeinflussung der passiven Rückhaltekomponenten Sicherheitsgurt und Kopf-/Thorax-Airbag nicht stattfindet, sondern sich beide in ihren Wirkungen jeweils ergänzen.

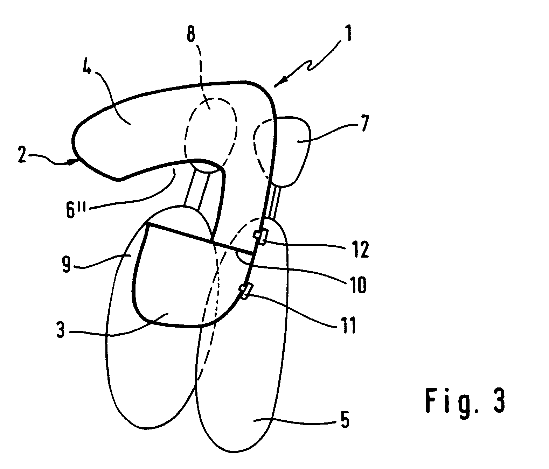

Schließlich zeigt Fig. 3 eine dritte Ausführungsform der Erfindung, wobei allerdings hier gegenüber den beiden vorstehend beschriebenen Ausführungsformen ein erheblich größerer Einschnitt 6'' vorgesehen ist, der hier vorne, also in Fahrtrichtung vorne, angesetzt ist und nach hinten gerichtet ist. Durch diese Ausführungsform können spezielle Fahrzeugtypen mit dem erfindungsgemäßen Airbagmodul versehen werden.

## Patentansprüche

1. Einem Fahrzeugsitz (5) eines Fahrzeuges zugeordnetes Airbagmodul (1) zum Schutz des Thorax- und Kopfbereiches einer in dem Fahrzeugsitz (5) sitzenden, mittels eines Sicherheitsgurtes als zusätzliche passive Rückhaltekomponente gesicherten Person, aufweisend wenigstens einen Gasgenerator und einen Luftsack (2) mit einer dem Thoraxbereich zugeordneten ersten Kammer (3) und einer dem Kopfbereich zugeordneten zweiten Kammer (4), in welche der wenigstens eine Gasgenerator auf ein Auslösesignal hin schlagartig Gas einleitet, dadurch gekennzeichnet, daß in der dem Kopfbereich zugeordneten zweiten Kammer (4) ein Einschnitt (6; 6') vorgesehen ist, durch welchen der Sicherheitsgurt die Konturen der mit Gas befüllten zweiten Kammer (4) durchtritt.

2. Airbagmodul nach Anspruch 1, dadurch gekennzeichnet, daß der Einschnitt (6) in der zweiten Kammer (4) oben angesetzt und nach unten gerichtet ist. (Fig. 1)

3. Airbagmodul nach Anspruch 1, dadurch gekennzeichnet, daß der Einschnitt (6') in der zweiten Kammer (4) hinten angesetzt und nach vorne gerichtet ist. (Fig. 2)

4. Airbagmodul nach Anspruch 1, dadurch gekennzeichnet, daß der Einschnitt (6'') in der zweiten Kammer (4) vorne angesetzt und nach hinten gerichtet ist. (Fig. 3)

5. Airbagmodul nach einem der Ansprüche 1 bis 4, dadurch gekennzeichnet, daß beide Kammern (3, 4) strömungstechnisch voneinander getrennt und jeweils einem eigenen Gasgenerator mit jeweils einem Gasstrom zugeordnet sind.

6. Airbagmodul nach einem der Ansprüche 1 bis 4, dadurch gekennzeichnet, daß beide Kammern (3, 4) strömungstechnisch voneinander getrennt sind und von einem Gasgenerator mit zwei Gasströmen aufblasbar sind.

7. Airbagmodul nach einem der Ansprüche 1 bis 4, dadurch gekennzeichnet, daß beide Kammern (3, 4) untereinander strömungstechnisch miteinander verbunden sind und von einem Gasgenerator mit zwei Gasströmen aufblasbar sind.

8. Airbagmodul nach einem der Ansprüche 1 bis 4, dadurch gekennzeichnet, daß beide Kammern (3,4) untereinander strömungstechnisch miteinander verbunden sind und von einem Gasgenerator mit einem Gasstrom aufblasbar sind.

9. Airbagmodul nach Anspruch 8, dadurch gekennzeichnet, daß der einzige Gasstrom von unten in die erste Kammer (3) zum Schutz des Thoraxbereiches geleitet wird.

10. Airbagmodul nach einem der Ansprüche 1 bis 9, dadurch gekennzeichnet,daß die Einleitung des Gasstromes von dem wenigstens einen Gasgenerator so erfolgt, daß die erste Kammer (3) für den Thoraxbereich früher gefüllt ist als die zweite Kammer (4).

11. Airbagmodul nach Anspruch 10, dadurch gekennzeichnet, daß die zweite Kammer (4) eine längere Bereitstellungszeit, während der sie mit Gas gefüllt ist, aufweist.

## Claims

1. Airbag module (1) assigned to a vehicle seat (5) of a vehicle for protecting the thorax and head region of a person sitting in the vehicle seat (5) and secured by means of a safety belt as an additional passive restraining component, having at least one gas generator and an air bag (2) with a first chamber (3) assigned to the thorax region and a second chamber (4) assigned to the head region, into which the at least one gas generator introduces gas suddenly on a triggering signal, characterized in that a notch (6; 6'), through which the safety belt passes the contours of the second chamber (4) filled with gas, is provided in the second chamber (4) assigned to the head region.

2. Airbag module according to claim 1, characterized in that the notch (6) in the second chamber (4) is made at the top and directed downwards. (Figure 1)

3. Airbag module according to claim 1, characterized in that the notch (6') in the second chamber (4) is made at the rear and directed forwards. (Figure 2)

4. Airbag module according to claim 1, characterized in that the notch (6'') in the second chamber (4) is made at the front and directed rearwards. (Figure 3)

5. Airbag module according to one of claims 1 to 4, characterized in that both chambers (3, 4) are separated from one another in terms of fluid mechanics and in each case are assigned to a separate gas generator with in each case one gas stream.

6. Airbag module according to one of claims 1 to 4, characterized in that both chambers (3, 4) are separated from one another in terms of fluid mechanics and can be inflated by a gas generator with two gas streams.

7. Airbag module according to one of claims 1 to 4, characterised in that both chambers (3, 4) together are connected to one another in terms of fluid mechanics and can be inflated by a gas generator with two gas streams.

8. Airbag module according to one of claims 1 to 4, characterised in that both chambers (3, 4) together are connected to one another in terms of fluid mechanics and can be inflated by a gas generator with one gas stream.

9. Airbag module according to claim 8, characterised in that the single gas stream is conveyed from below into the first chamber (3) for protecting the thorax region.

10. Airbag module according to one of claims 1 to 9, characterised in that the gas stream is introduced by the at least one gas generator so that the first chamber (3) for the thorax region is filled earlier than the second chamber (4).

11. Airbag module according to claim 10, characterised in that the second chamber (4) has a longer preparation time, during which it is filled with gas.

## Revendications

1. Module de coussin de sécurité gonflable (1) associé à un siège (5) de véhicule, pour la protection de la région du thorax et de la tête d'une personne assise dans le siège (5) du véhicule, attachée au moyen d'une ceinture de sécurité jouant le rôle de composant de retenue passif additionnel, présentant au moins un générateur de gaz et une poche à air (5), qui comprend elle-même une première chambre (3) associée à la région du thorax et une deuxième chambre (4) associée à la région de la tête, dans lesquelles au moins un générateur de gaz introduit brusquement du gaz en réponse à un signal de déclenchement, caractérisé en ce que, dans la deuxième chambre (4) associée à la région de la tête, est prévue une encoche (6 ; 6') à travers laquelle la ceinture de sécurité traverse les contours de la deuxième chambre (4) remplie de gaz.

2. Module de coussin de sécurité gonflable selon la revendication 1, caractérisé en ce que l'encoche (6) ménagée dans la deuxième chambre (4) commence en haut et est dirigée vers le bas (figure 1).

3. Module de coussin de sécurité gonflable selon la revendication 1, caractérisé en ce que l'encoche (6') ménagée dans la deuxième chambre (4) commence à l'arrière et est dirigée vers l'avant (figure 2).

4. Module de coussin de sécurité gonflable selon la revendication 1, caractérisé en ce que l'encoche (6'') ménagée dans la deuxième chambre (4) commence à l'avant et est dirigée vers l'arrière (figure 3).

5. Module de coussin de sécurité gonflable selon une des revendications 1 à 4, caractérisé en ce que les deux chambres (3, 4) sont séparées l'une de l'autre sous l'aspect de l'écoulement, et associées chacune à son propre générateur de gaz qui débite un courant de gaz.

6. Module de coussin de sécurité gonflable selon une des revendications 1 à 4, caractérisé en ce que les deux chambres (3, 4) sont séparées une de l'autre sous l'aspect de l'écoulement et peuvent être gonflées par un générateur de gaz qui débite deux courants de gaz.

7. Module de coussin de sécurité gonflable selon une des revendications 1 à 4, caractérisé en ce que les deux chambres (3, 4) disposées l'une au-dessous de l'autre sont réunies l'une à l'autre sous l'aspect de l'écoulement et peuvent être gonflées par un générateur de gaz débitant deux courants de gaz.

8. Module de coussin de sécurité gonflable selon une des revendications 1 à 4, caractérisé en ce que les deux chambres (3, 4) disposées l'une au-dessous de l'autre sont reliées l'une à l'autre sous l'aspect de l'écoulement et peuvent être gonflées par un générateur de gaz débitant un courant de gaz.

9. Module de coussin de sécurité gonflable selon la revendication 8, caractérisé en ce que l'unique courant de gaz est introduit par le bas dans la première chambre (3) destinée à la protection de la région du thorax.

10. Module de coussin de sécurité gonflable selon une des revendications 1 à 9, caractérisé en ce que l'introduction du courant de gaz est assurée par au moins un générateur de gaz de telle manière que la première chambre (3) prévue pour la région du thorax soit remplie plus tôt que la deuxième chambre (4).

11. Module de coussin de sécurité gonflable selon la revendication 10, caractérisé en ce que la deuxième chambre (4) présente un plus long temps de préparation pendant lequel elle se remplit de gaz.
